# EUROPÄISCHE PATENTSCHRIFT

(11) **EP 4 240 276 B1**
(45) Veröffentlichungstag und Bekanntmachung des Hinweises auf die Patenterteilung: **28.01.2026**
(21) Anmeldenummer: 21798973.0
(22) Anmeldetag: 20.10.2021
(51) Int. Cl.: A61C 15/02

(54) **VERFAHREN ZUR AUFBRINGUNG EINER BESCHICHTUNG AUF EINEN INTERDENTALREINIGER UND INTERDENTALREINIGER MIT EINER BESCHICHTUNG**
METHOD FOR APPLYING A COATING TO AN INTERDENTAL CLEANER, AND INTERDENTAL CLEANER HAVING A COATING
PROCÉDÉ D'APPLICATION D'UN REVÊTEMENT SUR UN DISPOSITIF DE NETTOYAGE INTERDENTAIR ET DISPOSITIF DE NETTOYAGE INTERDENTAIRE COMPRENANT UN REVÊTEMENT

(30) Priorität: 03.11.2020 DE 102020128848
(43) Veröffentlichungstag der Anmeldung: 13.09.2023
(73) Patentinhaber: Interbros GmbH, 79677 Schönau (DE)
(72) Erfinder: BUTZ, Jürgen, 79694 Utzenfeld (DE)
(74) Vertreter: Lichti - Patentanwälte Partnerschaft mbB
(86) Internationale Anmeldenummer: PCT/EP2021/079096
(87) Internationale Veröffentlichungsnummer: WO 2022/096270

(56) Entgegenhaltungen:
- JP-A- 2016 087 362
- US-A1- 2008 313 834
- US-A1- 2016 135 932

## Beschreibung

Die Erfindung betrifft einen Interdentalreiniger mit einem stabförmigen Träger aus Kunststoff, der in einem axialen Endbereich ein Reinigungsteil aus einem weich-elastischen Kunststoff aufweist, wobei das Reinigungsteil auf seiner Außenoberfläche in einem Beschichtungsbereich mit einer Beschichtung versehen ist.

Darüber hinaus betrifft die Erfindung ein Verfahren und eine Vorrichtung zur Aufbringung einer Beschichtung auf einen Interdentalreiniger.

Interdentalreiniger dienen zum Reinigen der Zahnzwischenräume. Ein üblicher Interdentalreiniger besitzt einen stabförmigen Träger aus Kunststoff, der in seinem hinteren axialen Endbereich einen Griffabschnitt aufweist. An dem dem Griffabschnitt entgegensetzten axialen Endbereich des stabförmigen Trägers ist ein Reinigungsteil aus einem weich-elastischen Kunststoff vorgesehen. Das Reinigungsteil kann hülsenförmig ausgestaltet sein und den vorderen Endbereich des stabförmigen Trägers umgeben und insbesondere auf diesen aufgespritzt sein, alternativ ist es jedoch auch möglich, dass das Reinigungsteil über den vorderen axialen Endbereich des Trägers hinausragt.

Um die Akzeptanz bei den Konsumenten zu erhöhen und um einen zusätzlichen Nutzen für den Konsumenten zu erreichen, kann es sinnvoll sein, im Bereich der Mundhygiene bekannte Substanzen und/oder Geschmacksstoffe in den Mundraum und insbesondere in die Zahnzwischenräume einzubringen. Dies kann beispielsweise dadurch erreicht werden, dass das Reinigungsteil des Interdentalreinigers mit einer Beschichtung aus einem entsprechenden Beschichtungsmittel versehen wird. Für das Aufbringen einer entsprechenden Beschichtung sind verschiedene Vorgehensweisen bekannt. Es ist möglich, das Reinigungsteil in einen flüssigen Vorrat des aufzubringenden Beschichtungsmittels einzutauchen und dann wieder herauszuziehen. Damit ist der Nachteil verbunden, dass sich in vielen Fällen Tropfen bilden, die einerseits ästhetisch und funktional nachteilig sind und andererseits dazu führen, dass übermäßig viel Beschichtungsmittel auf den Interdentalreiniger aufgebracht wird.

Alternativ ist es bekannt, das Beschichtungsmittel auf das Reinigungsteil aufzusprühen. Damit ist der Nachteil verbunden, dass es beim Sprühen zu hohen Verlusten des aufgesprühten Mediums kommt und dass eine Kapselung des Sprühraums notwendig ist, um den Sprühnebel aufzufangen. Ferner müssen Filter verwendet, um zu verhindern, dass der Sprühnebel in die Produktionsumgebung oder in die Umwelt gelangt. Darüber hinaus kann keine definierte Menge an Beschichtungsmittel auf das Reinigungsteil aufgebracht werden und es besteht die Gefahr, dass die sehr feinen Düsen bei längerem Betrieb verstopfen, so dass sie erst gereinigt werden müssen, bis die Produktion der Interdentalreiniger weitergehen kann.

Grundsätzlich ist mit jeder bekannten Aufbringung eines Beschichtungsmittels der Nachteil verbunden, dass das Reinigungsteil vollflächig mit einer umhüllenden Beschichtung versehen wird, die bei Trocknung aushärtet und die Biegesteifigkeit des Reinigungsteils und der Reinigungselemente, beispielsweise von Borsten, Lamellen, Fingern oder sogenannten Pins, erhöht. Dadurch ist beim Benutzer kein Gefühl der Weichheit (Soft Feeling) gegeben. Dies wird erst dann ausgeglichen, wenn der Benutzer den Interdentalreiniger in seinen Zahnzwischenraum einführt und die Beschichtung durch den Mundspeichel wieder aufweicht.

US 2016/135932 A1, JP 2016 087362 A und US 2008/313834 A1 werden als relevanter Stand der Technik zitiert.

Der Erfindung liegt die Aufgabe zugrunde, einen Interdentalreiniger der genannten Art zu schaffen, der eine definierte Menge an Beschichtungsmittel trägt und dessen Biegesteifigkeit durch das Beschichtungsmittel nicht oder nur in sehr geringem Maße beeinflusst ist.

Darüber hinaus soll ein Verfahren zur Aufbringung einer Beschichtung auf einen Interdentalreiniger geschaffen werden, mit dem sich das Beschichtungsmittel in einfacher Weise und in genauer Menge auf das Reinigungsteil des Interdentalreinigers aufbringen lässt.

Ferner soll eine Vorrichtung zur Aufbringung einer Beschichtung auf einen Interdentalreiniger geschaffen werden, mit der sich das Verfahren in einfacher Weise ausführen lässt.

Hinsichtlich des Interdentalreinigers wird die oben genannte Aufgabe durch einen Interdentalreiniger mit den Merkmalen des Anspruchs 1 gelöst. Dabei ist vorgesehen, dass der Beschichtungsbereich nur einen Teilbereich der Außenoberfläche des Reinigungsteils umfasst. Somit trägt das Reinigungsteil des Interdentalreinigers nur auf einem Teilbereich seiner Außenoberfläche das aufgebrachte Beschichtungsmittel. Die anderen Bereiche der Außenoberfläche tragen kein Beschichtungsmittel. Da das Reinigungsteil bei der erfindungsgemäßen Ausgestaltung nicht vollständig von einer Beschichtung umgeben oder eingehüllt ist, sondern die Beschichtung nur in einem Teilbereich aufgebracht ist, beeinträchtigt die Beschichtung die Biegesteifigkeit des Interdentalreinigers praktisch nicht. Die Größe des Teilbereichs beträgt vorzugsweise weniger als 50% und insbesondere weniger als 20% der gesamten Außenoberfläche des Reinigungsteils.

In bevorzugter Ausgestaltung ist vorgesehen, dass der die Beschichtung aufweisende Beschichtungsbereich bzw. Teilbereich der Außenoberfläche des Reinigungsteils sich in Längsrichtung des Trägers erstreckt. Dies ist beispielsweise gegeben, wenn die Beschichtung in streifenförmiger Konfiguration auf das Reinigungsteil aufgebracht ist. Ein entsprechender streifenförmiger Beschichtungsbereich kann sich entweder in axialer Richtung, d.h. in Längsrichtung des Interdentalreinigers erstrecken, es kann jedoch auch vorgesehen sein, dass ein entsprechender streifenförmiger Teilbereich wendelartig um das Reinigungsteil umläuft.

In Weiterbildung der Erfindung kann vorgesehen sein, dass der vordere, dem Handgriffteil abgewandte Spitzenabschnitt des Reinigungsteils auf einer Länge von zumindest 0,5mm und insbesondere im Bereich von 0,5mm bis 1,5 mm nicht mit einer Beschichtung versehen ist. Auf diese Weise ist sichergestellt, dass der Spitzenabschnitt des Reinigungsteils weich und flexibel gehalten wird, um beim Benutzer das Gefühl beim Einführen des Interdentalreinigers in den Zahnzwischenraum nicht negativ zu beeinflussen. Die Freihaltung des Spitzenabschnitts von dem Beschichtungsmittel kann entweder dadurch erreicht werden, dass der Transferkörper so kurz ist, dass er dem Spitzenabschnitt des Reinigungsteils nicht in Kontakt kommt, alterativ ist jedoch auch möglich, in dem Transferkörper Ausnehmungen vorzusehen, wobei der Spitzenabschnitt des Reinigungsteils bei Anlage des Transferkörpers im Bereich der Ausnehmungen angeordnet ist und somit nicht mit dem Transferkörper in Kontakt steht.

Bei einem Interdentalreiniger ist üblicherweise vorgesehen, dass das Reinigungsteil eine Vielzahl von radial nach außen hervorstehenden Reinigungselementen trägt. Bei den Reinigungselementen kann es sich beispielsweise um Finger handeln, die aus dem gleichen weich-elastischen Kunststoff wie das Reinigungsteil, beispielsweise einem thermoplastischen Elastomer, gebildet sind und einstückig mit dem Reinigungsteil verbunden sind. Die Finger können beispielsweise eine kreiskegelige, sich radial nach außen verjüngende Form aufweisen. Alternativ oder zusätzlich kann das Reinigungsteil Reinigungselemente in Form von radial nach außen hervorstehenden Borsten tragen. Borsten sind Teilstücke eines Monofilaments oder eines Multifilaments, die in vorbestimmter Länge von diesem abgelängt sind. Die Borsten können als Einzelborsten und/oder als Borstenbündel verarbeitet werden und sind vorzugsweise so angeordnet, dass sie das Reinigungsteil und auch den stabförmigen Träger durchdringen, auf beiden Seiten von dem Reinigungsteil axial hervorstehen und in das Material des Reinigungsteils und in das Material des Trägers eingebettet und dort gehalten sind.

Im Folgenden wird beispielhaft davon ausgegangen, dass es sich bei den Reinigungselementen um die genannten einstückig angeformten Finger handelt, jedoch ist die Erfindung darauf nicht beschränkt.

Die Reinigungselemente bzw. Finger können auf der Außenoberfläche des Reinigungsteils so angeordnet sein, dass sie mehrere sich in Längsrichtung des Trägers erstreckende Reihen an Reinigungselementen bzw. Fingern bilden. In Weiterbildung der Erfindung kann vorgesehen sein, dass der Beschichtungsbereich zwischen zwei benachbarten Reihen der Reinigungselemente bzw. Finger angeordnet ist. Dabei kann vorgesehen sein, dass nur einer der zwischen zwei benachbarten Reihen an Reinigungselementen oder Fingern gebildete Zwischenraum mit der Beschichtung versehen ist, während alle anderen entsprechenden Zwischenräume von der Beschichtung frei sind. Alternativ ist es jedoch möglich, dass jeder zweite Zwischenraum oder jeder dritte Zwischenraum über den Umfang des Interdentalreinigers mit einer entsprechenden Beschichtung versehen ist.

Der Beschichtungsbereich kann sich über die gesamte axiale Länge des Reinigungsteils erstrecken. Vorzugsweise ist vorgesehen, dass der Beschichtungsbereich sich über zumindest 50% der axialen Länge des Reinigungsteils und insbesondere über zumindest 80% der axialen Länge des Reinigungsteils erstreckt.

Das Reinigungsteil weist vorzugsweise einen auf dem Träger angeordneten hülsenförmigen Überzug aus dem weich-elastischen Kunststoffmaterial, beispielsweise einem thermoplastischen Elastomer, auf, der insbesondere auf den Träger aufgespritzt ist. Mit dem Aufspritzen können auch die Reinigungselemente in Form der Finger und/oder Lamellen ausgebildet werden.

Bei dem die Beschichtung bildenden Beschichtungsmittel kann es sich um eine antimikrobiell wirkende Substanz, beispielsweise CHX Chlorhexidin oder CPC Cetylpyridiniumchlorid und/oder um ätherische Öle und/oder um remineralisierende Stoffe beispielsweise Fluoride oder Isomalt und/oder um Geschmackstoffe und/oder um entzündungshemmende Substanzen, die beispielsweise Kamille, Ingwer Aloe Vera beinhalten, und/oder um desensibilisierende Substanzen, beispielsweise Kaliumnitrat, und/oder um Probiotika, beispielsweise Lactobacillos Reuteri, und/oder um das Dentin stärkende Stoffe, beispielsweise Hesperidin oder um Mischungen von genannten und anderer in der Mundhygiene bekannten Soffen, beispielsweise Zinkfluorid, handeln.

Hinsichtlich des Verfahrens wird die oben genannte Aufgabe dadurch gelöst, dass ein Transferkörper zumindest außenseitig und zumindest abschnittsweise mit einem Beschichtungsmittel versehen wird, woraufhin der Transferkörper zur Bildung der Beschichtung mit der Außenoberfläche des Reinigungsteil in Anlage gebracht wird. Durch die Größe der Kontaktfläche zwischen dem Transferkörper und der Außenoberfläche des Reinigungsteils kann die Größe des auszubildenden Beschichtungsbereichs sehr genau eingestellt werden. Eine flexible Einstellung der Menge des aufzutragenden Beschichtungsmittels kann durch einen Benutzer erreicht werden, indem auch Parameter wie die Geschwindigkeit des Transferkörpers und/oder die Geometrie des Reinigungsteils des Interdentalreinigers und/oder die Geometrie des Transferkörpers und/oder die Oberflächenstruktur des Transferkörpers und insbesondere die Größe einer Kontaktfläche zwischen dem Transferkörper und dem Reinigungsteil des Interdentalkörpers eingestellt werden. Es hat sich gezeigt, dass die Menge an Beschichtungsmittel, die mittels des Transferkörpers auf die Außenoberfläche des Reinigungsteils aufgebracht wird, in engen vorgegebenen Grenzen gehalten werden kann.

Das Reinigungsteils kann über seine gesamte Länger mit dem Beschichtungsmittel versehen werden, es ist jedoch auch möglich, nur einen Teilbereich der Länge des Reinigungsteils, beispielsweise nur den hinteren, dem Griffabschnitt zugewandten Bereich oder nur der vordere, dem Griffabschnitt abgewandten Bereich mit dem Beschichtungsmittel zu versehen.

Die Aufbringung des Beschichtungsmittels auf den Transferkörper kann durch Aufstreichen oder Aufsprühen erreicht werden. Bevorzugt ist jedoch vorgesehen, dass das Beschichtungsmittel durch Eintauchen aufgebracht wird, indem der Transferkörper in ein Beschichtungsmittelbad eingetaucht wird.

Der Transferkörper kann eine zylindrische Form und insbesondere eine kreiszylindrische Form oder eine kegelige Form und insbesondere eine kreiskegelige Form aufweisen. Je nach Viskosität des aufzubringenden Beschichtungsmittels können unterschiedliche Transferkörper verwendet werden. Insbesondere kann der Transferkörper einen abgeflachten und insbesondere ebenen Oberflächenbereich aufweisen. Dies kann beispielsweise durch einen Zylinder mit einem vieleckigen Querschnitt, insbesondere einem dreieckigen, viereckigen oder sechseckigen Querschnitt erreicht werden. Durch die Ausbildung von ebenen Flächen kann eine definierte Kontaktfläche zwischen dem Transferkörper und dem Reinigungsteil erreicht werden und es ist möglich, sicher zu stellen, dass das Beschichtungsmittel unabhängig von seiner Viskosität von dem Transferkörper ablaufen kann.

Wenn das Reinigungsteil eine Vielzahl von radial nach außen hervorstehenden Reinigungselementen, beispielsweise Fingern der genannten Art trägt, die in zumindest zwei sich in Längsrichtung des Trägers erstreckenden Reihen angeordnet sind, kann in Weiterbildung des Verfahrens vorgesehen sein, dass der Transferkörper in einen zwischen zwei benachbarten Reihen gebildeten Zwischenraum eingeführt wird. Auf diese Weise wird das am Transferkörper außenseitig befindliche Beschichtungsmittel auf die den Boden des Zwischenraums bildenden Oberflächenbereiche des Reinigungsteils aufgebracht.

Vorzugsweise wird der Transferkörper auch mit den dem Zwischenraum zugewandten Seitenflächen der Reinigungselemente bzw. Finger in Anlage gebracht, so dass auch diese Seitenflächen mit dem Beschichtungsmittel versehen werden. Dabei kann vorgesehen sein, dass die Reinigungselemente bzw. Finger von dem Transferkörper elastisch verformt werden, wenn dieser in den zwischen zwei benachbarten Reihen gebildeten Zwischenraum eingeführt wird. Dadurch ist sichergestellt, dass die Reinigungselemente bzw. Finger von außen gegen die Oberfläche des Transferkörpers gespannt sind und eine ausreichende Menge an Beschichtungsmittel aufnehmen.

Um die Aufnahme des Beschichtungsmittels auf der Außenoberfläche des Reinigungsteils zu verbessern, kann das Reinigungsteil, insbesondere wenn es aus einem thermoplastischen Elastomer besteht, zumindest abschnittsweise und insbesondere zumindest in dem Beschichtungsbereich vor der Aufbringung der Beschichtung einer Oberflächenbehandlung unterzogen werden. Bei der Oberflächenbehandlung kann es sich um ein Aufrauen und/oder eine Erwärmung und/oder eine Korona-Behandlung und/oder eine Plasma-Behandlung handeln.

Das genannte Beschichtungsverfahren kann an einzelnen Interdentalreinigern ausgeführt werden. Es ist jedoch in wirtschaftlicher Hinsicht sinnvoll, mehrere Interdentalreiniger gleichzeitig mit der teilweisen Beschichtung zu versehen. Zu diesem Zweck kann vorgesehen sein, dass mehrere Interdentalreiniger zu einer Interdentalreiniger-Gruppe zusammengefasst und insbesondere über Stege miteinander verbunden. Eine Gruppe kann beispielsweise aus acht oder mehr nebeneinander angeordneten Interdentalreinigern bestehen.

Eine erfindungsgemäße Vorrichtung zur Aufbringung einer Beschichtung auf einen Interdentalreiniger der genannten Art zeichnet sich durch einen Transferkörper aus, der relativ zum Interdentalreiniger zwischen einer Aufnahmeposition, in der er zumindest abschnittsweise und zumindest außenseitig mit dem Beschichtungsmittel in Kontakt bringbar ist, und einer Abgabeposition verstellbar ist, in der der das Beschichtungsmittel tragende Transferkörper mit der Außenoberfläche des Reinigungsteils in Anlage steht.

Zur Aufnahme des Beschichtungsmittels kann ein Beschichtungsbad vorgesehen sein, das ein mit dem Beschichtungsmittel gefülltes Becken aufweist, in das der Transferkörper eintauchbar ist. Der Transferkörper ist vorzugsweise an einem beispielsweise vertikal verstellbaren Halter angebracht, mit dessen Verstellung der Transferkörper vorzugsweise vollständig in das Beschichtungsbad eintauchbar ist.

Der Interdentalreiniger kann mit seinem Reinigungsteil oberhalb des Beschichtungsbades angeordnet werden, so dass der Transferkörper durch eine reine vertikale Translationsbewegung aus dem Beschichtungsbad herausgehoben und in seiner Abgabeposition mit der Außenoberfläche des Reinigungsteils in Anlage gebracht werden kann.

Der Transferkörper kann aus einem Kunststoff und insbesondere aus einem porigen Material, beispielsweise aus einem offenporigen oder einem geschlossenporigen Kunststoffschaum bestehen. Vorzugsweise besteht der Transferkörper jedoch aus Metall und insbesondere aus vorzugsweise rostfreiem Stahl.

Die Außenoberfläche des Transferkörpers kann vorbehandelt sein, um die gleichmäßige Aufnahme des Beschichtungsmittels über die gesamte Fläche zu verbessern. Bei der Vorbehandlung kann es sich um eine außenseitige Korona-Behandlung und/oder eine außenseitige Aufrauung des Transferkörpers handeln. Eine entsprechende Aufrauung wird vorzugsweise durch eine mechanische Bearbeitung, beispielsweise durch Sandstrahlen, Schleifen oder durch Ätzen oder Erodieren erzeugt.

Die Vorrichtung kann so ausgelegt sein, dass immer nur ein Interdentalreiniger mit einer Beschichtung versehen werden kann. Vorzugsweise wird jedoch zumindest eine aus mehreren Interdentalreinigern gebildete Interdentalreiniger-Gruppe mit einer entsprechenden Beschichtung versehen. Dabei kann jedem Interdentalreiniger ein eigener Transferkörper zugeordnet sein, so dass auch die Transferkörper in einer entsprechenden Transferkörper-Gruppe angeordnet sind. In besonderer Weiterbildung der Vorrichtung ist vorgesehen, dass mehrere Interdentalreiniger-Gruppen gleichzeitig in einem Arbeitsschritt mit der Beschichtung versehen werden, wozu vorzugsweise auch entsprechend mehrere Transferkörper-Gruppen vorgesehen sind, die in ihren Bewegungen gekoppelt sind, d.h. vorzugsweise gleichzeitig in das Beschichtungsbad eintauchen und auch vorzugsweise gleichzeitig ihre Abgabeposition erreichen, in der sie mit der Außenoberfläche des jeweils zugeordneten Reinigungsteils in Anlage stehen.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine schematische perspektivische Ansicht eines Interdentalreinigers,
- Fig. 2: das Reinigungsteil des Interdentalreinigers gemäß Fig. 1 in vergrößerter Darstellung,
- Fig. 3: eine schematische Schnittansicht einer Vorrichtung zur Aufbringung einer Beschichtung auf einen Interdentalreiniger, wobei sich der Transferkörper in seiner Aufnahmeposition befindet,
- Fig. 4: eine Fig. 3 entsprechende Darstellung, wobei sich der Transferkörper in seiner Abgabeposition befindet,
- Fig. 5: den Schnitt V-V in Fig. 4,
- Fig. 6: eine schematische perspektivische Darstellung einer Vorrichtung zur gleichzeitigen Aufbringung einer Beschichtung auf mehrere Interdentalreiniger,
- Fig. 7: eine Aufsicht auf den Transferkörper und das Reinigungsteil während der Beschichtung und
- Fig. 8: eine spezielle Ausgestaltung des Transferkörpers.

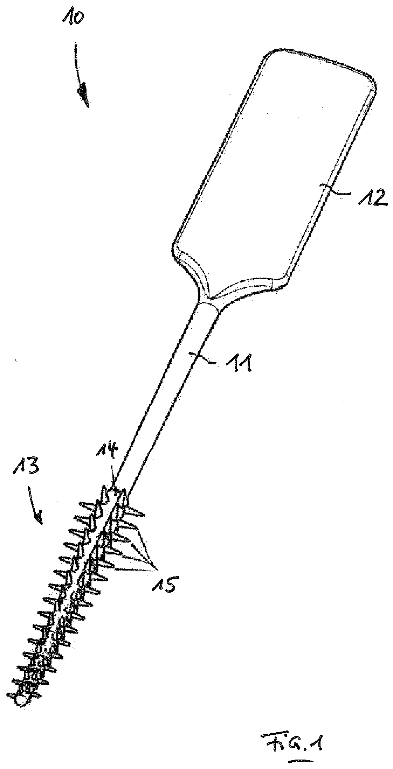

Fig. 1 zeigt eine perspektivische Darstellung eines Interdentalreinigers 10, der einen stabförmigen Träger 11 aus einem formstabilen Kunststoff aufweist, an den an seinem axial hinteren Ende ein plattenförmiger Griffabschnitt 12 einstückig angeformt ist. Am entgegengesetzten vorderen axialen Ende ist an dem Träger 11 ein Reinigungsabschnitt 13 ausgebildet. Der Reinigungsabschnitt 13 besitzt einen hülsenförmigen Überzug 14 des Trägers 11, der sich am vorderen Ende des Trägers 11 über etwa ein Drittel der Länge des Interdentalreinigers 10 erstreckt. Der hülsenförmige Überzug 14 besteht aus einem weich-elastischen Material, beispielsweise einem thermoplastischen Elastomer, und trägt auf seiner Außenseite radial nach außen hervorstehende Reinigungselemente 15 in Form von einstückig angeformten, kegelförmigen Fingern.

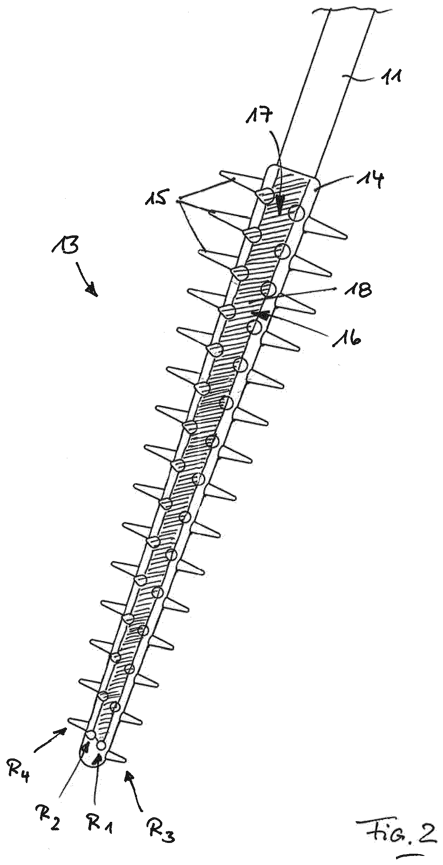

Wie insbesondere Fig. 2 zeigt, sind die Reinigungselemente 15 in Form von mehreren sich in Längsrichtung des Trägers 11 erstreckenden Reihen R₁, R₂, R₃, R₄ angeordnet, wobei zwischen zwei benachbarten Reihen jeweils ein streifenförmiger, sich in Längsrichtung des Interdentalreingers 10 erstreckender Zwischenraum 17 gebildet ist. Einer der Zwischenräume 17 wird zur Bildung eines Beschichtungsbereichs 18 genutzt. Der Beschichtungsbereich 18 umfasst den Boden des Zwischenraums 17, d.h. die zwischen den beiden benachbarten Reihen R₁, R₂ angeordnete Außenoberfläche des Reinigungsteils und auch teilweise Oberflächenbereiche der Reinigungselemente 15, die dem Zwischenraum 17 zugewandt sind.

In dem Beschichtungsbereich 18 ist eine Beschichtung 16 beispielsweise aus einem Zahnpflegemittel aufgebracht.

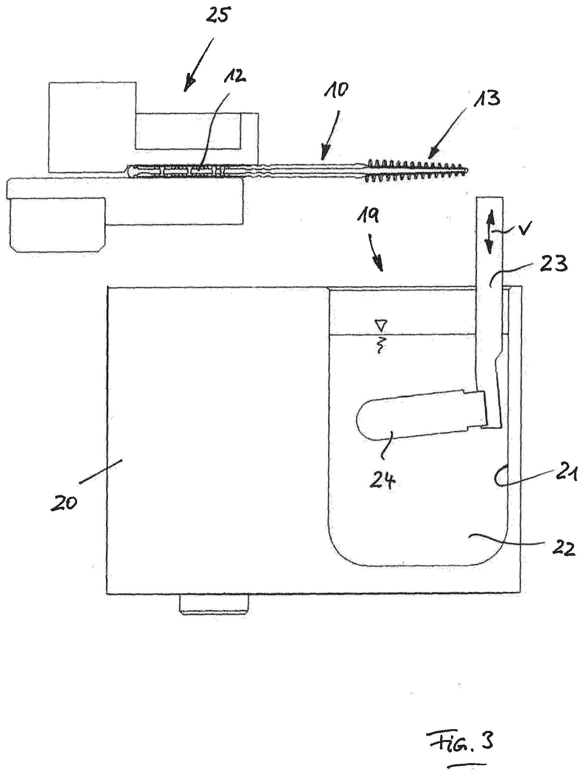

Eine Vorrichtung zur Aufbringung der Beschichtung 16 auf den Interdentalreiniger 10 ist in Fig. 3 schematisch dargestellt. Die Vorrichtung umfasst ein Gehäuse 20, in dem ein Becken 21 ausgebildet ist, das nach oben offen ist und in dem sich ein Beschichtungsmittelbad 19 mit einem flüssigen Beschichtungsmittel 22 befindet.

Ein Halter 23 ist vertikal verstellbar, wie es durch den Doppelpfeil V angedeutet ist, und trägt einen Transferkörper 24, der im dargestellten Fall als Kreiszylinder ausgebildet ist, der an seinem hinteren Ende am Halter 23 angebracht und am entgegensetzten vorderen Ende sphärisch abgerundet ist. Der Transferkörper 24 kann aus Metall und insbesondere Stahl bestehen und an seiner Oberfläche so behandelt sein, dass die Aufnahme oder die Benetzung mit dem Beschichtungsmittel 22 verbessert ist.

Oberhalb des Gehäuses 20 ist eine Haltevorrichtung 25 angeordnet, in die ein Interdentalreiniger 10 mit seinem hinteren Griffabschnitt 12 eingespannt und gehalten ist. Das vordere Reinigungsteil 13 des Interdentalreinigers 10 ist frei auskragend oberhalb des Beschichtungsmittelbades 19 angeordnet.

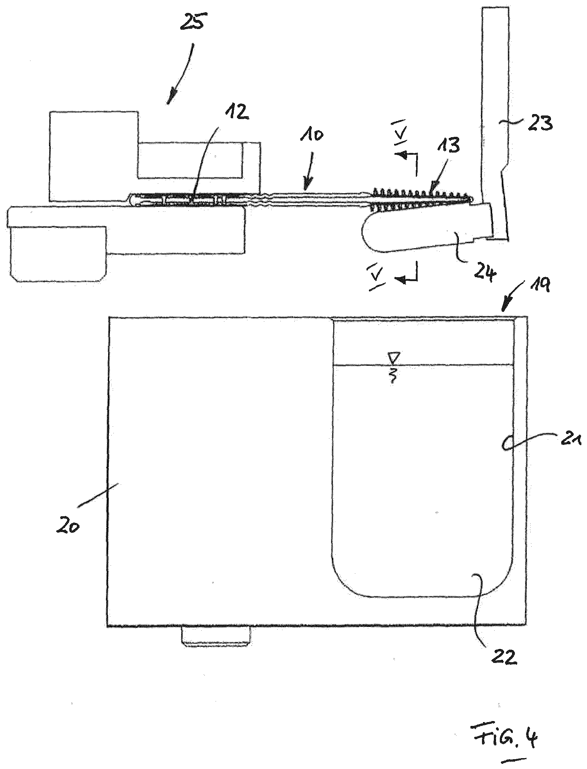

Gemäß Fig. 3 befindet sich der Transferkörper 24 in seiner Aufnahmeposition, in der er vollständig in das Beschichtungsmittel 22 des Beschichtungsmittelbades 19 eintaucht. Anschließend wird der Halter 23 vertikal nach oben verfahren, bis der Transferkörper 24 mit der Außenoberfläche des Reinigungsteils 13 in Anlage kommt. Diese Abgabeposition ist in Fig. 4 dargestellt.

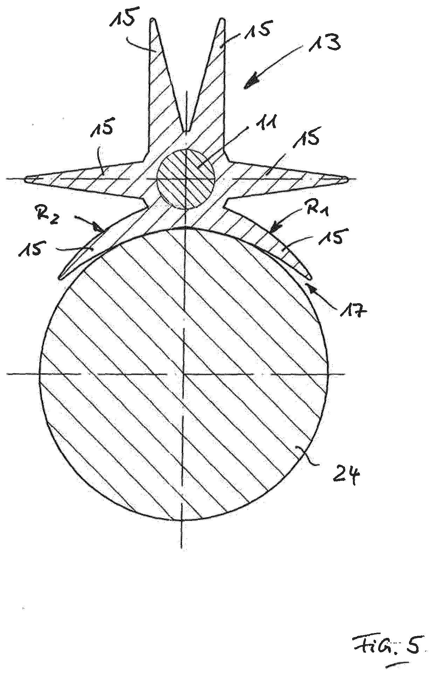

Wie sich aus der Schnittdarstellung gemäß Fig. 5 ergibt, greift der Transferkörper 24 dabei in den zwischen zwei benachbarten Reihen R₁, R₂ der Reinigungselemente 15 gebildeten Zwischenraum 17 ein und verformt dabei die Reinigungselemente 15 elastisch und drückt sie seitlich nach außen, so dass die dem Zwischenraum 17 zugewandten Oberflächen der Reinigungselemente 15 und der Boden des Zwischenraums 17 großflächig mit der Oberfläche des Transferkörpers 24 in Anlage kommen, wodurch das Beschichtungsmittel 22 übertragen wird.

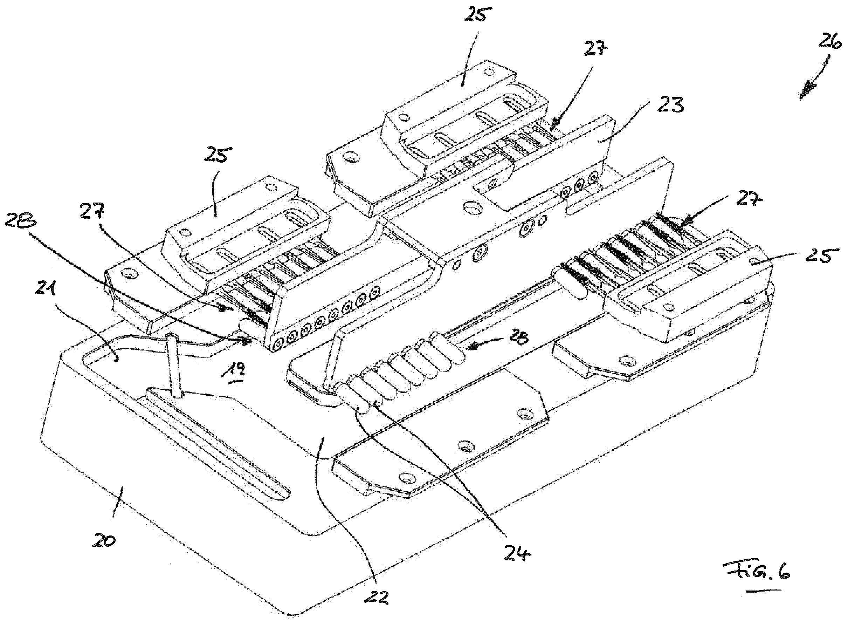

Fig. 6 zeigt in schematischer und teilweise vereinfachter Darstellung eine Vorrichtung 26, um eine Vielzahl von Interdentalreinigern 10 gleichzeitig mit der Beschichtung zu versehen. Gemäß dem dargestellten Ausführungsbeispiel sind vier Interdentalreiniger-Gruppen 27 aus jeweils 8 Interdentalreinigern 10 vorgesehen. Die Interdentalreiniger 10 jeder Interdentalreiniger-Gruppe 27 sind miteinander verbunden und jeweils in eine Haltevorrichtung 25 eingespannt.

Es sind vier Transferkörper-Gruppen 28 mit jeweils acht Transferkörpern 24 vorgesehen, wobei jeder Transferkörper 24 einem Interdentalreiniger 10 in genannter Weise zugeordnet ist. Die Transferkörper-Gruppen 28 sind alle an dem gemeinsamen Halter 23 angeordnet und somit in ihrer Bewegung synchronisiert. Durch Absenken des Halters 23 können alle Transferkörper-Gruppen 28 gleichzeitig in das Beschichtungsmittelbad 19 eingetaucht und anschließend gleichzeitig in die jeweilige Abgabeposition verstellt werden, in der jeweils ein Transferkörper 24 mit dem Reinigungsteil 13 des zugeordneten Interdentalreinigers 10 in Anlage kommt und das Beschichtungsmittel überträgt.

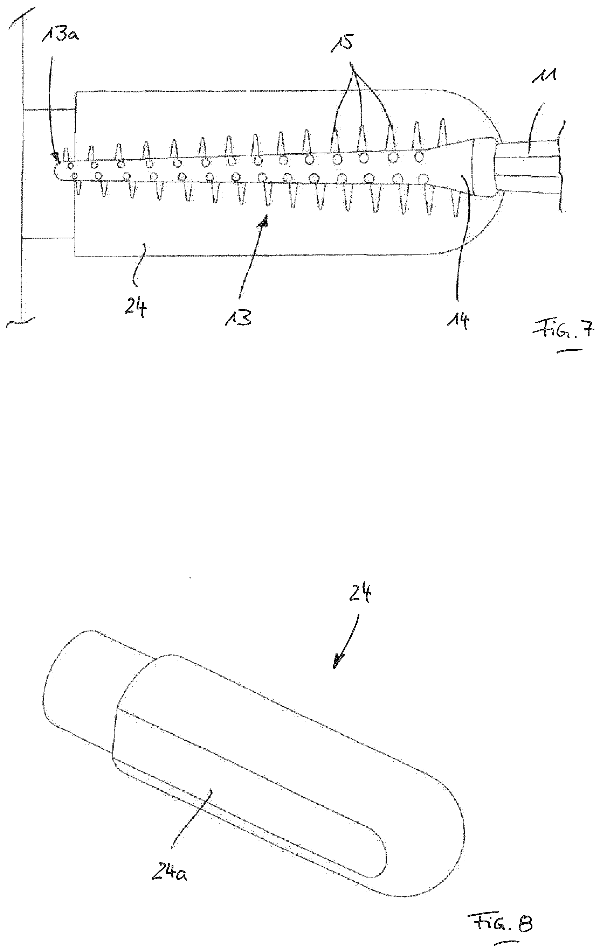

Wie Fig. 7 zeigt, kann in spezieller Ausgestaltung der Erfindung vorgesehen sein, dass ein am vorderen Ende des Reinigungsteils 13 ausgebildeter Spitzenabschnitt 13a mit dem Transferkörper 24 nicht in Anlage kommt und somit das Beschichtungsmittel in diesem Spitzenabschnitt 13a nicht auf das Reinigungsteil 13 aufgebracht wird. Dies führt dazu, dass der Spitzenabschnitt 13a weich, elastisch und flexibel bleibt.

Fig. 8 zeigt eine spezielle Ausgestaltung des Transferkörpers 24, der eine grundsätzlich zylindrische Form mit einer am vorderen Ende ausgebildeten sphärischen Abrundung besitzt. Auf zumindest einer Seite des Transferkörpers 24 ist eine sich in Längsrichtung des Transferkörpers 24 erstreckender ebener Oberflächenbereich 24a gebildet, der sich annähernd über die gesamte Länge zumindest des zylindrischen Teils des Transferkörpers 24 erstreckt.

## Patentansprüche

1. Interdentalreiniger (10) mit einem stabförmigen Träger (11) aus Kunststoff, der in einem axialen Endbereich ein Reinigungsteil (13) aus einem weich-elastischen Kunststoff aufweist, wobei das Reinigungsteil (13) einen auf dem Träger (11) angeordneten hülsenförmigen Überzug (14) aufweist und eine Vielzahl von radial nach außen hervorstehenden Reinigungselementen (15) trägt, **dadurch gekennzeichnet, dass** das Reinigungsteil (13) auf seiner Außenoberfläche in einem Beschichtungsbereich (18) mit einer Beschichtung (16) versehen ist und dass der Beschichtungsbereich (18) nur einen Teilbereich der Außenoberfläche des Reinigungsteils (13) umfasst.

2. Interdentalreiniger nach Anspruch 1, **dadurch gekennzeichnet, dass** der Beschichtungsbereich (18) sich in Längsrichtung des Trägers (11) erstreckt.

3. Interdentalreiniger nach Anspruch 1 oder 2 **dadurch gekennzeichnet, dass** die Reinigungselemente (15) in zumindest zwei sich in Längsrichtung des Trägers (11) erstreckenden Reihen (R₁, R₂, R₃, R₄) angeordnet sind, und dass der Beschichtungsbereich zwischen zwei benachbarten Reihen (R₁, R₂) angeordnet ist.

4. Interdentalreiniger nach einem der Ansprüche 1 bis 3, **dadurch gekennzeichnet, dass** der Beschichtungsbereich (18) sich über zumindest 50% der axialen Länge des Reinigungsteils (13) erstreckt.

5. Interdentalreiniger nach einem der Ansprüche 1 bis 4, **dadurch gekennzeichnet, dass** die Beschichtung (16) von einer antimikrobiellen Substanz und/oder von einem ätherischen Öl und/oder von einem remineralisierenden Stoff und/oder von einem Geschmacksstoff und/oder von einer entzündungshemmenden Substanz und/oder von einer desensibilisierenden Substanz und/oder von Probiotika und/oder von einem Dentin stärkenden Stoff oder von Mischungen der genannten Stoffe gebildet ist.

6. Interdentalreiniger nach einem der Ansprüche 1 bis 5, **dadurch gekennzeichnet, dass** ein vorderer Spitzenabschnitt (13a) des Reinigungsteils (13) beschichtungsfrei ist.

7. Verfahren zur Aufbringung einer Beschichtung (16) auf einen Interdentalreiniger zur Herstellung eines Interdentalreinigers (10) nach einem der Ansprüche 1 bis 6, wobei der Interdentalreiniger (10) einen stabförmigen Träger (11) und ein Reinigungsteil (13) aus einem weich-elastischen Kunststoff aufweist, wobei ein Transferkörper (24) zumindest außenseitig und zumindest abschnittsweise mit einem Beschichtungsmittel (22) versehen wird, woraufhin der Transferkörper (24) zur Bildung der Beschichtung (16) mit der Außenoberfläche des Reinigungsteils (13) in Anlage gebracht wird.

8. Verfahren nach Anspruch 7, **dadurch gekennzeichnet, dass** der Transferkörper (24) in ein Beschichtungsmittelbad (19) eingetaucht wird.

9. Verfahren nach Anspruch 7 oder 8, **dadurch gekennzeichnet, dass** das Reinigungsteil (13) eine Vielzahl von radial nach außen hervorstehenden Reinigungselementen (15) trägt, die in zumindest zwei sich in Längsrichtung des Trägers (11) erstreckenden Reihen (R₁, R₂, R₃, R₄) angeordnet sind, und dass der Transferkörper (24) in einen zwischen zwei benachbarten Reihen (R₁, R₂) gebildeten Zwischenraum (17) eingeführt wird.

10. Verfahren nach einem der Ansprüche 7 bis 9, **dadurch gekennzeichnet, dass** das Reinigungsteil (13) vor der Aufbringung der Beschichtung (16) auf seiner Außenoberfläche zumindest abschnittsweise korona-behandelt und/oder plasma-behandelt wird.

11. Verfahren nach einem der Ansprüche 7 bis 10, **dadurch gekennzeichnet, dass** ein vorderer Spitzenabschnitt (13a) des Reinigungsteils (13) beschichtungsfrei belassen wird.

## Claims

1. An interdental cleaner (10) with a rod-like support (11) made of plastic, which has a cleaning part (13) made of a soft-elastic plastic in an axial end region, wherein the cleaning part (13) has a sleeve-like coating (14) arranged on the support (11) and carries a plurality of radially outwardly projecting cleaning elements (15), **characterized in that** the cleaning part (13) is provided with a coating (16) on its external surface in a coating region (18), and that the coating region (18) comprises only a partial region of the external surface of the cleaning part (13).

2. The interdental cleaner according to claim 1, **characterized in that** the coating region (18) extends in the longitudinal direction of the support (11).

3. The interdental cleaner according to claim 1 or 2, **characterized in that** the cleaning elements (15) are arranged in at least two rows (R₁, R₂, R₃, R₄) extending in the longitudinal direction of the support (11), and **in that** the coating region is arranged between two adjacent rows (R₁, R₂).

4. The interdental cleaner according to any one of claims 1 to 3, **characterized in that** the coating region (18) extends over at least 50% of the axial length of the cleaning part (13).

5. The interdental cleaner according to any one of claims 1 to 4, **characterized in that** the coating (16) is formed by an antimicrobial substance and/or by an essential oil and/or by a remineralizing substance and/or by a flavoring substance and/or by an anti-inflammatory substance and/or by a desensitizing substance and/or by probiotics and/or by a dentin-strengthening substance or by mixtures of the specified substances.

6. The interdental cleaner according to any one of claims 1 to 5, **characterized in that** a front tip portion (13a) of the cleaning part (13) is free of coating.

7. A method for applying a coating (16) to an interdental cleaner (10) for producing an interdental cleaner according to any one of claims 1 to 6, wherein the interdental cleaner (10) has a rod-like support (11) and a cleaning part (13) made of a soft-elastic plastic, wherein a transfer body (24) is provided at least on the outside and at least in portions with a coating agent (22), whereupon the transfer body (24) is brought into contact with the external surface of the cleaning part (13) to form the coating (16).

8. The method according to claim 7, **characterized in that** the transfer body (24) is immersed in a coating agent bath (19).

9. The method according to claim 7 or 8, **characterized in that** the cleaning part (13) carries a plurality of radially outwardly projecting cleaning elements (15) arranged in at least two rows (R₁, R₂, R₃, R₄) extending in the longitudinal direction of the support (11), and **in that** the transfer body (24) is inserted into a space (17) formed between two adjacent rows (R₁, R₂).

10. The method according to any one of claims 7 to 9, **characterized in that** the cleaning part (13) is corona-treated and/or plasma-treated at least in portions before the coating (16) is applied to its external surface.

11. The method according to any one of claims 7 to 10, **characterized in that** a front tip portion (13a) of the cleaning part (13) is left free of coating.

## Revendications

1. Dispositif de nettoyage interdentaire (10) comportant un support (11) en forme de tige en matière plastique, lequel support présente, dans une zone d'extrémité axiale, une partie de nettoyage (13) en une matière plastique souple et élastique, dans lequel la partie de nettoyage (13) présente un revêtement (14) en forme de douille disposé sur le support (11) et supporte une pluralité d'éléments de nettoyage (15) faisant saillie radialement vers l'extérieur, **caractérisé en ce que** la partie de nettoyage (13) est pourvue d'un revêtement (16) sur sa surface extérieure dans une zone de revêtement (18) **et en ce que** la zone de revêtement (18) ne comprend qu'une zone partielle de la surface extérieure de la partie de nettoyage (13).

2. Dispositif de nettoyage interdentaire selon la revendication 1, **caractérisé en ce que** la zone de revêtement (18) s'étend dans la direction longitudinale du support (11).

3. Dispositif de nettoyage interdentaire selon la revendication 1 ou 2, **caractérisé en ce que** les éléments de nettoyage (15) sont disposés en au moins deux rangées (R₁, R₂, R₃, R₄) s'étendant dans la direction longitudinale du support (11), **et en ce que** la zone de revêtement est disposée entre deux rangées (R₁, R₂) voisines.

4. Dispositif de nettoyage interdentaire selon l'une des revendications 1 à 3, **caractérisé en ce que** la zone de revêtement (18) s'étend sur au moins 50 % de la longueur axiale de la partie de nettoyage (13).

5. Dispositif de nettoyage interdentaire selon l'une des revendications 1 à 4, **caractérisé en ce que** le revêtement (16) est formé d'une substance antimicrobienne et/ou d'une huile essentielle et/ou d'une substance reminéralisante et/ou d'un agent aromatisant et/ou d'une substance anti-inflammatoire et/ou d'une substance désensibilisante et/ou de probiotiques et/ou d'une substance renforçant la dentine ou de mélanges desdites substances.

6. Dispositif de nettoyage interdentaire selon l'une des revendications 1 à 5, **caractérisé en ce qu'**une section de pointe avant (13a) de la partie de nettoyage (13) est dépourvue de revêtement.

7. Procédé pour l'application d'un revêtement (16) sur un dispositif de nettoyage interdentaire pour la fabrication d'un dispositif de nettoyage interdentaire (10) selon l'une des revendications 1 à 6, dans lequel le dispositif de nettoyage interdentaire (10) présente un support (11) en forme de tige et une partie de nettoyage (13) en une matière plastique souple et élastique, dans lequel un corps de transfert (24) est pourvu d'un agent de revêtement (22) au moins du côté extérieur et au moins dans certaines sections, après quoi le corps de transfert (24) est mis en contact avec la surface extérieure de la partie de nettoyage (13) pour former le revêtement (16).

8. Procédé selon la revendication 7, **caractérisé en ce que** le corps de transfert (24) est immergé dans un bain d'agent de revêtement (19).

9. Procédé selon la revendication 7 ou 8, **caractérisé en ce que** la partie de nettoyage (13) supporte une pluralité d'éléments de nettoyage (15) faisant saillie radialement vers l'extérieur, lesquels sont disposés en au moins deux rangées (R₁, R₂, R₃, R₄) s'étendant dans la direction longitudinale du support (11), et **en ce que** le corps de transfert (24) est introduit dans un espace intermédiaire (17) formé entre deux rangées (R₁, R₂) voisines.

10. Procédé selon l'une des revendications 7 à 9, **caractérisé en ce que** la partie de nettoyage (13) est traitée par effet corona et/ou par plasma au moins dans certaines sections avant l'application du revêtement (16) sur sa surface extérieure.

11. Procédé selon l'une des revendications 7 à 10, **caractérisé en ce qu'**une section de pointe avant (13a) de la partie de nettoyage (13) reste exempte de revêtement.
